(19) **Europäisches Patentamt**
**European Patent Office**
**Office européen des brevets**

(11) **EP 1 522 473 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(51) Int Cl.:
**B60T 8/17** *(2006.01)*

(21) Anmeldenummer: **04018793.2**

(22) Anmeldetag: **07.08.2004**

(54) **Verfahren zur Abschätzung einer Querbeschleunigung eines Fahrzeugaufliegers**

Method for estimating the lateral acceleration of a semi-trailer

Procédé d'estimation de l'accélération transversale d'une semi-remorque

(84) Benannte Vertragsstaaten:
**DE FR IT NL SE**

(30) Priorität: **07.10.2003 DE 10346434**

(43) Veröffentlichungstag der Anmeldung:
**13.04.2005 Patentblatt 2005/15**

(73) Patentinhaber: **WABCO GmbH**
**30453 Hannover (DE)**

(72) Erfinder:
• **Bonder, Thomas**
**30455 Hannover (DE)**

• **Heuer, Bernd**
**31171 Nordstemmen (DE)**
• **Franke, Torsten**
**31303 Burgdorf (DE)**

(74) Vertreter: **Schrödter, Manfred et al**
**WABCO GmbH**
**Postfach 91 12 62**
**30432 Hannover (DE)**

(56) Entgegenhaltungen:
**DE-A1- 10 019 150**  **US-B1- 6 498 976**

**Beschreibung**

Die Erfindung bezieht sich auf ein Verfahren zur Abschätzung einer Querbeschleunigung eines Fahrzeugaufliegers gemäß dem Oberbegriff des Patentanspruchs 1.

Heutige Straßenfahrzeuge, insbesondere auch Nutzfahrzeuge, werden in zunehmendem Maße mit elektronischen Bremssystemen (EBS) ausgestattet. Bei diesen erfolgt die Signalübertragung vom Bremspedal zur EBS-Elektronik über eine elektrische Verbindungsleitung. Die Beaufschlagung der eigentlichen Bremszylinder zum Antrieb der Bremsen, z.B. mittels Druckluft, erfolgt über vorgeschaltete Magnetventile. Mit diesen kann der Bremsdruck gesteigert, gehalten oder gesenkt werden. Die Magnetventile werden elektrisch von der oben genannten EBS-Elektronik angesteuert.

Im Vergleich zu einer konventionellen, mechanischen Bremsanlage ist es bei einem EBS auch möglich, unabhängig vom Fahrer die Bremsen des Fahrzeugs mit Bremsmittel zu beaufschlagen und somit das Fahrzeug automatisch abzubremsen. Diese Möglichkeit wird von verschiedenen Systemen, die in das EBS integriert sein können, genutzt. Solche Systeme können zum Beispiel sein: eine Abstandsregelung (Adaptive Cruise Control ACC), ein Antiblockiersystem (ABS), eine Anfahrschlupfregelung (ASR), eine Stabilitätsregelung (Electronic Stability Control ESC) bzw. Fahrdynamikregelung (FDR) oder eine Umkipp-Verhinderung (Rollover Stability Control RSC).

Die zuletzt erwähnte Umkipp-Verhinderung, die in die Stabilitätsregelung integriert sein kann, hat die Aufgabe, das Fahrzeug in schwierigen Fahrsituationen vor einem Umkippen zu bewahren. Solche Situationen können beispielsweise das schnelle Durchfahren einer Kurve oder ein schneller Spurwechsel bei einem Überholmanöver sein. Durch die Umkipp-Verhinderung wird der Fahrer frühzeitig mittels einer Signaleinrichtung gewarnt und das Fahrzeug nötigenfalls zusätzlich durch Beaufschlagung aller oder einzelner Radbremsen verlangsamt und somit stabilisiert.

Bei einem bekannten Verfahren zur Verhinderung des Umkippens eines Fahrzeugs, insbesondere eines Sattelzuges (DE 199 58 221 A1), wird eine kritische Querbeschleunigung bzw. Grenzbeschleunigung für das jeweilige Fahrzeug bestimmt. Während der Fahrt wird dann ständig die aktuelle Querbeschleunigung mittels eines besonderen Querbeschleunigungssensors oder auch aus den Werten von Radgeschwindigkeitssensoren bestimmt und mit der oben genannten Grenzbeschleunigung verglichen. Sobald etwa 75% der Grenzbeschleunigung erreicht sind, wird der Fahrer gewarnt und gegebenenfalls zusätzlich die Fahrgeschwindigkeit durch eine automatische Motordrosselung oder eine automatische Einbremsung verringert.

Der genannte Querbeschleunigungssensor ist normalerweise im Auflieger, nahe bei der Hinterachse bzw. nahe dem Schwerpunkt des Aufliegers angeordnet. Dabei ist eine gleichmäßige Beladung des Aufliegers vorrausgesetzt. Eine an dieser Stelle gemessene Querbeschleunigung ist für eine Verhinderung eines drohenden Umkippens des Aufliegers besonders relevant.

Nachteilig ist dabei natürlich der für die Montage und Verdrahtung des bekannten Querbeschleunigungssensors zu treibende Aufwand. Von einer im Fahrzeug bereits vorhandenen Elektronik (ECU) einer Fahrdynamikregelung (FDR) kann die Querbeschleunigung des Aufliegers nicht erfaßt werden, da die ECU der FDR üblicherweise im Schwerpunkt der Sattelzugmaschine montiert ist. Ein in der ECU der FDR normalerweise vorhandener Querbeschleunigungssensor zeigt daher nur die im Schwerpunkt der Sattelzugmaschine herrschende Querbeschleunigung und etwaige Störgrößen an.

Mit Hilfe einer FDR soll in bekannter Weise die im Schwerpunkt des Aufliegers herrschende Querbeschleunigung so geregelt bzw. reduziert werden, daß das Fahrzeug in einer Kurve nicht'umkippt. Wird die Querbeschleunigung zu groß, reduziert die ECU der FDR das Motormoment und betätigt nötigenfalls zusätzlich die Betriebsbremse. Mit Hilfe der EBS sind dazu auch einzelne Räder bremsbar.

Die Querbeschleunigung im Auflieger weicht jedoch erfahrungsgemäß insbesondere bei Kurvenfahrten mit großem Knickwinkel zwischen Zugwagen und Auflieger von der Querbeschleunigung ab, die von der ECU der FDR in der Sattelzugmaschine gemessen wird. Würde diese Querbeschleunigung trotzdem zur Regelung herangezogen, so würde das zu unangepaßten Regeleingriffen führen. Ein derartiges Verhalten würde vom Fahrer als störend empfunden und somit die Akzeptanz der FDR vermindern.

Aus diesem Grund ist es vorteilhafter, die Meßwerte eines im Auflieger (Schwerpunkt) angeordneten Sensors zu verwenden. Ein solcher (zusätzlicher) Querbeschleunigungssensor bedeutet jedoch einen erhöhten Aufwand.

Der Erfindung liegt die Aufgabe zugrunde, ein Verfahren zur Gewinnung einer Querbeschleunigungsgröße eines Fahrzeugaufliegers, insbesondere bei einem Nutzfahrzeug (Sattelzug) anzugeben, welches ohne einen besonderen Querbeschleunigungssensor im Auflieger auskommt.

Ein Verfahren zur Abschätzung einer Querbeschleunigung eines Fahrzeugaufliegers gemäß dem Oberbegriff des Anspruchs 1 ist aus dem Dokument DE 10019150 bekannt.

Diese Aufgabe wird durch die im Patentanspruch 1 angegebene Erfindung gelöst. Die Unteransprüche enthalten zweckmäßige Weiterbildungen.

Wie sich in Fahrversuchen gezeigt hat, kann aus der von der FDR gemessenen Querbeschleunigung im Schwerpunkt der Zugmaschine mit Hilfe der Fahrzeuggeschwindigkeit auf die von der RSC benötigte Querbeschleunigung im Schwerpunkt des Aufliegers geschlossen werden. Hierdurch läßt sich ein besonderer Querbeschleunigungssensor im Auflieger einsparen. Mit Hilfe des erfindungsgemäß ermittelten gefilterten Wertes aq_gef läßt sich trotzdem eine komfortable FDR bzw. RSC realisieren. Außerdem ergibt sich, wie unten näher erläutert wird, in vorteilhafter Weise eine zeitliche Voreilung des Meßwertes, wodurch früher reagiert werden kann.

Die Erfindung wird im folgenden an Hand einer Zeichnung näher erläutert. Diese zeigt in

Fig. 1    eine schematische Darstellung eines Nutzfahrzeuges (Sattelzug) in der Draufsicht zur Darstellung der Bewegungsgrößen, und in

Fig. 2    eine Darstellung der Verläufe von Fahrzeuggeschwindigkeit V, gemessener Querbeschleunigung im Zugwagen aqZug, gemessener Querbeschleunigung im Auflieger aqAufl, berechneter Querbeschleunigung im Auflieger aq_gef, Bremsdruck der Vorderachse pVA sowie Bremsdruck der Hinterachse pHA über der Zeit.

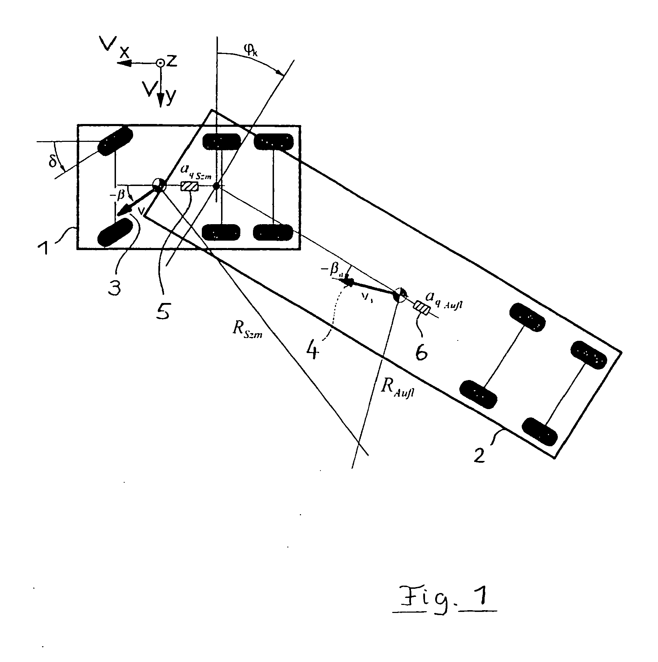

Die Fig. 1 zeigt in schematischer Darstellung einen Sattelzug in der Draufsicht, der sich gerade in einer Linkskurve befindet. Dabei ist mit (1) der Zugwagen und mit (2) der Auflieger bezeichnet. Der Schwerpunkt des Zugwagens (1) bewegt sich mit einer Geschwindigkeit vz in Richtung des Pfeiles 3. Der Schwerpunkt des Aufliegers (2) bewegt sich mit einer Geschwindigkeit va in Richtung des Pfeiles 4.

Die genannten Pfeile 3, 4 gehen jeweils vom Schwerpunkt des Zugwagens bzw. Aufliegers aus, und sind nicht mit den Längsachsen der beiden Fahrzeugteile identisch. Daraus folgt, daß sich das gezeichnete Fahrzeug gerade in einer Kurvenfahrt befindet.

Der Schwimmwinkel des Zugwagens (1), d. h. die Abweichung seiner tatsächlichen Bewegungsrichtung von seiner Längsachse, beträgt -βz. Der entsprechende Schwimmwinkel des Aufliegers beträgt -βa. Dabei bedeutet das Minuszeichen, daß sich das Fahrzeug in einer Linkskurve befindet.

Der Lenkwinkel des Zugwagens ist mit δ bezeichnet. Dies ist der Winkel, um den die Vorderräder des Zugwagens von der Geradeausstellung abweichen.

Der Knickwinkel zwischen Zugwagen und Auflieger beträgt φk.

Der bei einer Kurvenfahrt gefahrene Radius im Schwerpunkt des Zugwagens (1) beträgt RSzm (Szm = Sattelzugmaschine), und entsprechend beträgt der gefahrene Radius im Schwerpunkt des Aufliegers (2) RAufl. Wie aus der Fig. 1 erkennbar, ist Letzterer stets kleiner als der gefahrene Radius des Zugwagens.

Zur Erfassung der tatsächlichen Querbeschleunigungen von Zugwagen (1) und Auflieger (2) sind in der Fig. 1 ein erster Querbeschleunigungssensor (5) zur Messung der Querbeschleunigung aqSzm für den Zugwagen und ein zweiter Querbeschleunigungssensor (6) zur Messung der Querbeschleunigung aqAufl für den Auflieger eingezeichnet. Beide Querbeschleunigungssensoren befinden sich etwa am Ort des Schwerpunktes der jeweiligen Fahrzeugteile.

Wie unten näher erläutert wird, wird erfindungsgemäß der zweite (hintere) Querbeschleunigungssensor durch eine elektronische Berechnung eingespart.

Mit vx und vy sind die Fahrzeuggeschwindigkeiten im Schwerpunkt der Zugmaschine bezeichnet. Dabei gilt der Wert vx für die Längsrichtung und der Wert vy für die Querrichtung der Zugmaschine.

Die oben erläuterten, in der Fig. 1 dargestellten Fahrzeug-Bewegungsgrößen werden ganz oder zum Teil in einer im Zugwagen eingebauten elektronischen Stabilitätsregelung (ESC) verwendet (nicht dargestellt). Zusätzlich zu den Meßwerten des Querbeschleunigungssensors (5) verwendet eine gebräuchliche ESC im allgemeinen noch Sensoren für die Drehzahlen der Räder sowie Meßwerte eines Lenkwinkelsensors und eines Gierratensensors für den Zugwagen. Die genannten Sensoren sind nicht in der Fig. 1 dargestellt, aber dem Fachmann bekannt.

Aus den Werten der Radsensoren können in bekannter Weise durch Differenzierung die Beschleunigungswerte der Fahrzeugteile berechnet werden, so daß separate Sensoren für die Fahrzeug-Längsbeschleunigung nicht benötigt werden.

Die oben genannten Bewegungsgrößen werden innerhalb der ESC bzw. FDR softwaremäßig zur Beschreibung eines internen Fahrzeugmodells verwendet. Ein solches Fahrzeugmodell ist z. B. aus der US 5,747,683 bekannt. Hierdurch ist der ESC stets bekannt, in welchem Fahrzustand sich ein z.B. schleuderndes Fahrzeug gerade befindet. Über eine entsprechende Logik der ESC wird dann durch Rücknahme des Antriebsmomentes oder durch Einzelradbremsung in bekannter Weise versucht, das Fahrzeug wieder zu stabilisieren.

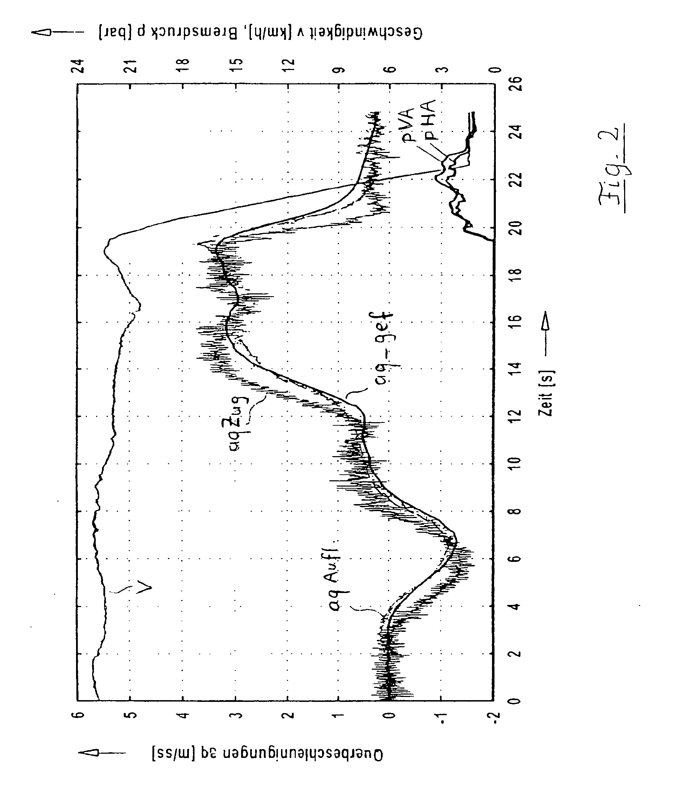

In der Fig. 2 ist über der Zeit der Verlauf verschiedener Parameter (gemessen und erfindungsgemäß berechnet) eines Sattelzuges während einer versuchsweisen Kurvenfahrt aufgetragen.

Der Sattelzug fährt zunächst mit einer etwa konstanten Geschwindigkeit V und wird dann nach etwa 20 Sekunden auf eine Geschwindigkeit nahe Null herabgebremst. Die dazu verwendeten Bremsdrücke für die Vorderachse (pVA) und für die Hinterachse (pHA) sind rechts unten im Diagramm eingetragen.

Für das Fahrzeug werden weiter mit entsprechenden Sensoren die Querbeschleunigungen im Auflieger (aqAufl) (gering verrauscht) und im Zugwagen (aqZug) (stark verrauscht) gemessen.

Schließlich ist eine erfindungsgemäß berechnete gefilterte Querbeschleunigung (aq_gef) (unverrauscht) des Aufliegers eingetragen. Wie man sieht, besteht zwischen der gemessenen Querbeschleunigung aqAufl des Aufliegers und der berechneten bzw. gefilterten Querbeschleunigung aq_gef eine gute Übereinstimmung.

Im Diagramm der Fig. 2 sind die Anfangswerte der Querbeschleunigungen des Zugwagens wie des Aufliegers gleich Null, d. h. das Fahrzeug befindet sich zunächst in einer Geradeausfahrt. Nach etwa 2 Sekunden werden die Querbeschleunigungen negativ, d. h. das Fahrzeug beginnt eine Kurvenfahrt, beispielsweise eine Linkskurve. Nach etwa 8 Sekunden werden die Querbeschleunigungen positiv, d. h. das Fahrzeug befindet sich nun in einer Rechtskurve.

Wie man aus den Verläufen erkennt, ergibt sich eine deutliche Phasenverschiebung zwischen den Querbeschleunigungen der Zugmaschine und des Aufliegers. Dabei erscheint die Querbeschleunigung der Zugmaschine um etwa 1 Sekunde früher als die Querbeschleunigung des Aufliegers. Diese Phasen-Voreilung ist in einer Hinsicht vorteilhaft, da man dadurch eine deutlich kürzere Reaktionszeit auf etwaige kritische Zustände des Aufliegers erhält. Andererseits kann, wie bereits erwähnt, die Querbeschleunigung der Zugmaschine nicht zur Regelung des Aufliegers verwendet werden, da dadurch falsche Regelsignale erzeugt würden.

Um dieses Problem zu lösen, ohne einen besonderen Querbeschleunigungssensor im Auflieger einbauen zu müssen, wird erfindungsgemäß die Querbeschleunigung des Aufliegers durch eine Berechnung bestimmt. Wie bereits erwähnt, zeigt die so erhaltene gefilterte Querbeschleunigung aq_gef des Aufliegers eine gute Übereinstimmung mit dem gemessenen Wert aq_Aufl.

Etwaige Welligkeiten bzw. Rauschen im gemessenen Verlauf der Querbeschleunigung der Zugmaschine aqZug werden in bekannter Weise durch die Filterung beseitigt.

Es ist auch möglich, anstelle der erfindungsgemäßen Berechnung die Werte der Querbeschleunigung des Aufliegers einer in der ECU der FDR gespeicherten Tabelle zu entnehmen. Eine solche Tabelle kann in Versuchs fahrten aufgestellt werden.

Als Größe für die Fahrzeuggeschwindigkeit V wird vorteilhaft die Schwerpunktsgeschwindigkeit der Sattelzugmaschine verwendet (vgl. Fig. 1).

Zweckmäßig wird ein aktueller Wert der gefilterten Querbeschleunigung aq_gef(n) des Sattelaufliegers mit Hilfe der Formel

$$\texttt{aq\_gef(n)} = [(V^2(n-1)/V^2(n) \times \texttt{aqZug} + \texttt{aq\_gef(n-1)} \times k] / (k+1) + (1-V^2(n-1)/V^2(n)) \times \texttt{aqZug}$$

berechnet wird, worin

| | |
|---|---|
| n = | aktueller Wert |
| n-1 = | vorheriger Wert |
| V = | Fahrzeuggeschwindigkeit der Zugmaschine |
| aqZug = | gemessene Querbeschleunigung der Sattelzugmaschine |
| k = | Filterkonstante |

Wie man erkennt, wird jeweils fortlaufend ein aktueller bzw. neuer Wert berechnet, wobei jeweils für die Berechnung des neuen Wertes (n) die Fahrzeuggeschwindigkeit und die Querbeschleunigung aus der vorherigen Berechnung (n-1) mitbenutzt wird. Hierdurch ergibt sich eine Phasenverschiebung gemäß Fig. 2 zwischen aqZug und aq_gef.

Die obenstehende Formel gilt sowohl für eine gebremste wie auch für eine ungebremste Fahrt. Bei einer ungebremsten Fahrt wird der letzte Summand zu Null, da dann $V^2(n-1) = V^2(n)$ wird.

Vorteilhaft wird die in der Formel enthaltene Filterkonstante k von der Fahrzeuggeschwindigkeit V abhängig gemacht. Dabei kann die Filterkonstante k in Stufen umschaltbar sein.

Es hat sich als zweckmäßig erwiesen, die Filterkonstante k bei einer Fahrzeuggeschwindigkeit oberhalb 40 km/h und bei einer Abtastfrequenz für die og. Formel von etwa 200 Herz auf einen Wert von etwa 5 zu setzen. Unterhalb von 40 km/h steigt die Filterkonstante bis auf einen Wert von über 100 an. Das bedeutet, daß die Phasenverschiebung zwischen der berechneten (gefilterten) Querbeschleunigung des Aufliegers und der gemessenen Querbeschleunigung im Zugwagen um so größer ausfällt, je langsamer das Fahrzeug fährt. Dieses Verhalten hat sich bei Versuchsfahrten auch als günstig erwiesen, da Querbeschleunigungen in einem für eine Umkippverhinderung relevanten Wertebereich in der Praxis vor allem bei Abbiegemanövern mit großem Lenkeinschlag, aber geringer Geschwindigkeit auftreten.

Wie oben bereits erläutert, kann mit Hilfe der Erfindung eine für den Fahrer komfortable Fahrdynamikregelung (FDR bzw. ESC) realisiert werden, ohne daß ein besonderer Querbeschleunigungssensor im Auflieger montiert werden muß.

## EP 1 522 473 B1

### Patentansprüche

1. Verfahren zur Abschätzung einer Querbeschleunigung eines Fahrzeugaufliegers (2), zur Verwendung bei Sattelzügen innerhalb einer elektronischen Stabilitätsregelung (ESC) oder einer Umkippverhinderung (RSC) zur Verhinderung des Umkippens des Fahrzeugs in kritischen Fahrsituationen, wobei bei Erreichen einer kritischen Querbeschleunigung eine Warnung des Fahrers und/oder eine automatische Geschwindigkeits-Verringerung des Fahrzeugs erfolgt, und wobei wenigstens eine der Fahrzeuggeschwindigkeit entsprechende Größe bestimmt wird, **dadurch gekennzeichnet,**
**daß** eine gefilterte Querbeschleunigung aq_gef des Sattelaufliegers (2) aus wenigstens den Größen für eine in der Sattelzugmaschine (1) gemessene Querbeschleunigung aqZug und für eine gemessene Fahrzeuggeschwindigkeit V mit Hilfe einer Berechnung bestimmt wird, und an Stelle einer gemessenen Querbeschleunigung des Sattelaufliegers in der Stabilitätsregelung (ESC) oder Umkippverhinderung (RSC) verwendet wird.

2. Verfahren nach Anspruch 1, **dadurch gekennzeichnet, daß** als Größe für die Fahrzeuggeschwindigkeit V die Schwerpunktsgeschwindigkeit der Sattelzugmaschine (1) verwendet wird.

3. Verfahren nach einem oder beiden der Ansprüche 1 und 2, **dadurch gekennzeichnet, daß** der aktuelle Wert der gefilterten Querbeschleunigung aq gef(n) des Sattelaufliegers (2) mit Hilfe der Formel

$$aq\_gef(n) = [(V^2(n-1)/V^2(n) \times aqZug + aq\_gef(n-1) \times k] / (k+1) + (1-V^2(n-1)/V^2(n)) \times aqZug$$

berechnet wird, worin

n = aktueller Wert
n-1 = vorheriger Wert
V = Fahrzeuggeschwindigkeit
aqZug = gemessene Querbeschleunigung der Sattelzugmaschine
k = Filterkonstante

4. Verfahren nach Patentanspruch 3,
**dadurch gekennzeichnet, daß** die Filterkonstante k von der Fahrzeuggeschwindigkeit V abhängig ist.

5. Verfahren nach Anspruch 3 oder 4,
**dadurch gekennzeichnet, daß** die Filterkonstante k in Stufen umschaltbar ist.

### Claims

1. Method of estimating a lateral acceleration of a vehicle semi-trailer (2), for use in the case of tractor-trailer trucks in an electronic stability control (ESC) or roll stability control (RSC) for preventing the vehicle from rolling over in critical driving situations, wherein when a critical lateral acceleration is reached the driver is provided with a warning and/or an automatic reduction of the speed of the vehicle is brought about, and wherein at least one variable corresponding to the vehicle speed is determined, **characterised in that**
a filtered lateral acceleration aq_gef of the semi-trailer (2) is determined using a calculation based at least on the variables for a lateral acceleration aqZug measured in the tractor unit (1) and for a measured vehicle speed V and is used instead of a measured lateral acceleration of the semi-trailer in the stability control (ESC) or roll stability control (RSC).

2. Method according to claim 1, **characterised in that** the centre-of-mass speed of the tractor unit (1) is used as the variable for the vehicle speed V.

3. Method according to one or both of claims 1 and 2, **characterised in that** the current value of the filtered lateral acceleration aq_gef(n) of the semi-trailer (2) is calculated using the formula

$$aq\_gef(n) = [(V^2(n-1)/V^2(n) \times aqZug + aq\_gef(n-1) \times k] / (k+1) + (1-V^2(n-1)/V^2(n))$$
$$\times aqZug$$

wherein

n = current value
n-1 = previous value
V = vehicle speed
aqZug = measured lateral acceleration of the tractor unit
k = filter constant

**4.** Method according to patent claim 3,
<u>**characterised in that**</u> the filter constant k is dependent on the vehicle speed V.

**5.** Method according to claim 3 or 4,
<u>**characterised in that**</u> the filter constant k is changeable in steps.

**Revendications**

**1.** Procédé d'estimation de l'accélération transversale d'une semi-remorque (2), en vue de l'utilisation dans des semi-remorques à l'intérieur d'un dispositif de réglage de stabilité électronique (ESC) ou d'un dispositif anti-renversement (RSC) pour empêcher le renversement du véhicule dans des situations critiques, dans lequel, une fois l'accélération transversale critique atteinte, un avertissement du conducteur et/ou une réduction automatique de vitesse du véhicule se produit, et dans lequel au moins une grandeur correspondant à la vitesse du véhicule est déterminée, **caractérisé en ce que** une accélération transversale filtrée aq_gef de la remorque (2) est déterminée au moins à partir des grandeurs pour une accélération mesurée dans le tracteur (1) aqZug et pour une vitesse de véhicule mesurée V à l'aide d'un calcul, et est utilisée au lieu d'une accélération transversale mesurée de la remorque dans le dispositif de réglage de stabilité (ESC) ou le dispositif d'empêchement de retournement (RSC).

**2.** Procédé selon la revendication 1, **caractérisé en ce que** la vitesse du centre de gravité du tracteur (1) est utilisé comme grandeur pour la vitesse du véhicule V.

**3.** Procédé selon l'une ou les deux revendications 1 et 2, **caractérisé en ce que** la valeur actuelle de l'accélération transversale filtrée aq_gef(n) de la remorque (2) est calculée à l'aide de la formule

$$aq\_gef(n) = [(V^2(n-1)/V^2(n) \times aqZug + aq\_gef(n-1) \times k]/$$
$$(k+1) + (1 - V^2(n-1)/V^2(n)) \times aqZug$$

où

n = valeur actuelle
n-1 = valeur précédente
V = vitesse du véhicule
aqZug = accélération transversale mesurée du tracteur
k = constante de filtration

**4.** Procédé selon la revendication 3, **caractérisé en ce que** la constante de filtration k dépend de la vitesse du véhicule V.

**5.** Procédé selon la revendication 3 ou 4, **caractérisé en ce que** la constante de filtration k peut être commutée progressivement.

$\underline{\mathfrak{Fig.}\ 1}$

Fig. 2

**EP 1 522 473 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19958221 A1
- DE 10019150

- US 5747683 A